# EUROPEAN PATENT APPLICATION

(11) **EP 2 840 798 A1**
(43) Date of publication of application: **25.02.2015**
(21) Application number: 13777911.2
(22) Date of filing: 09.04.2013
(51) Int. Cl.: H04N 21/435, H04B 1/16, H04H 60/27, H04N 21/84

(54) **RECEPTION DEVICE, RECEPTION METHOD, TRANSMISSION DEVICE, TRANSMISSION METHOD, AND PROGRAM**

(30) Priority: 18.04.2012 US 201261635061 P
(71) Applicant: Sony Corporation, Tokyo 108-0075 (JP)
(72) Inventor: DEWA Yoshiharu, Tokyo 108-0075 (JP); KITAZATO Naohisa, Tokyo 108-0075 (JP)
(74) Representative: Witte, Weller & Partner Patentanwälte mbB
(86) International application number: PCT/JP2013/060676
(87) International publication number: WO 2013/157440

(57) **Abstract**

The present technology relates to a reception apparatus, a reception method, a transmission apparatus, a transmission method, and a program for flexibly offering diverse operation modes of an NRT service.

A file attribute information acquisition part acquires file attribute information set for each of the files of contents transmitted by broadcast waves and targeted to be downloaded. A display control part, a reproduction control part, or a file control part controls predetermined operations on the files of the contents based on the file attribute information acquired by the file attribute information acquisition part. This technology may be applied, for example, to a reception apparatus capable of receiving NRT broadcasts complying with a predetermined standard.

## Description

### [Technical Field]

The present technology relates to a reception apparatus, a reception method, a transmission apparatus, a transmission method, and a program. More particularly, this technology relates to a reception apparatus, a reception method, a transmission apparatus, a transmission method, and a program for flexibly offering diverse operation modes of an NRT service.

### [Background Art]

In recent years, the widespread use of digital broadcasting has led to the general acceptance of multichannel or high-definition TV broadcasts.

Meanwhile, studies are underway on the techniques and schemes for utilizing the band frequencies available for digital broadcasting in bringing about not only ordinary TV broadcasts but also more sophisticated broadcast services desired by users.

One of the functions desired by the user is on-demand viewing whereby content is viewed whenever it is desired. However, it has been considered difficult to implement on-demand viewing of not bidirectional but unidirectional broadcasts.

In order to bring about the on-demand viewing of unidirectional broadcasts, studies are underway on an NRT service (e.g., see Patent Literature 1) in which, on the assumption that a reception apparatus retains mass storage, the file data of broadcast content is held temporarily in storage before being reproduced.

In the NRT (Non Real Time) service, content is not supposed to be viewed in real time. The file data of the content transmitted by broadcast waves is downloaded and accumulated in storage. This allows the user to view the stored content regardless of the broadcast time of the content.

### [Citation List]

### [Patent Literature]

[PTL 1]
JP 2011-41242A

### [Summary]

### [Technical Problem]

Meanwhile, where content downloads are to be reserved with the NRT service, it is necessary to obtain beforehand information called NRT-IT (NRT Information Table) about downloading of the contents to be transmitted on a non-real-time basis. NRT-IT describes a list of the contents that can be reserved for downloading; the desired content is selected from that list.

However, NRT-IT does not include file attribute information about the content files to be downloaded. For this reason, the reception apparatus can only handle the files uniformly, which has limited the operation modes in which NRT service offerings are made available.

The present technology has been made in view of the above circumstances and aims to provide various operation modes of the NRT service in flexible fashion.

### [Solution to Problem]

According to a first aspect of the present technology, there is provided a reception apparatus including: a reception part configured to receive contents transmitted by broadcast waves and targeted to be downloaded; a file attribute information acquisition part configured to acquire file attribute information set for each of the files of the contents; and a control part configured to control predetermined operations on the files of the contents based on the file attribute information acquired.

When the contents have been downloaded or are being downloaded, the file attribute information acquisition part may acquire the file attribute information.

The reception apparatus of this technology may further include a file attribute information setting part configured to, if a predetermined process is performed on the contents, change the settings of the file attribute information in accordance with the details of the predetermined process.

The file attribute information may include a first attribute for setting whether or not to display the files of the contents, and the control part may control the display of a list of the contents based on the first attribute included in the file attribute information.

If the contents are charged contents, the file attribute information setting part may change the attribute value of the first attribute from non-display to display after a charging process on the contents is completed.

The file attribute information may include a second attribute for setting whether or not to read the files of the contents, and the control part may control reproduction of the contents based on the second attribute included in the file attribute information.

The file attribute information may include a third attribute for setting whether or not to change the files of the contents, and the control part may control changes of the contents based on the third attribute included in the file attribute information.

The file attribute information setting part may change the settings of the file attribute information in accordance with execution of a script described in an application program to be executed in interlocked relation to the applicable content transmitted by broadcast waves.

The file attribute information setting part may change the settings of the file attribute information solely within a range of management established by a business operator offering the contents and by a business operator offering the application program.

The contents may be transmitted by an NRT (Non Real Time) broadcast utilizing a FLUTE (File Delivery over Unidirectional Transport) session, and the file attribute information may be defined as attributes in an NRT-IT (NRT Information Table).

The reception apparatus may be either an independent apparatus or an internal block constituting part of a single apparatus.

Also according to the first aspect of the present technology, there is provided a reception method or a program functionally corresponding to the above-outlined reception apparatus according to the first aspect of this technology.

By use of the reception apparatus, reception method, and program according to the first aspect of the present technology, the contents transmitted by broadcast waves and targeted to be downloaded are acquired, and the file attribute information set for each of the files of the contents is acquired. Predetermined operations are then controlled on the files of the contents based on the file attribute information thus acquired.

According to a second aspect of the present technology, there is provided a transmission apparatus including: a setting part configured to set file attribute information for each of the files of contents transmitted by broadcast waves and targeted to be downloaded; and a transmission part configured to transmit the contents for which the file attribute information has been set, using the broadcast waves.

Also according to the second aspect of the present technology, there is provided a transmission method corresponding to the above-outlined transmission apparatus according to the second aspect of this technology.

By use of the transmission apparatus and transmission method according to the second aspect of the present technology, the file attribute information is set for each of the files of the contents transmitted by broadcast waves and targeted to be downloaded. The contents for which the file attribute information has been set are then transmitted using the broadcast waves.

### [Advantageous Effect of Invention]

According to the first and the second aspects of the present technology, diverse operation modes of the NRT service may be offered flexibly.

### [Brief Description of Drawings]

[FIG. 1]

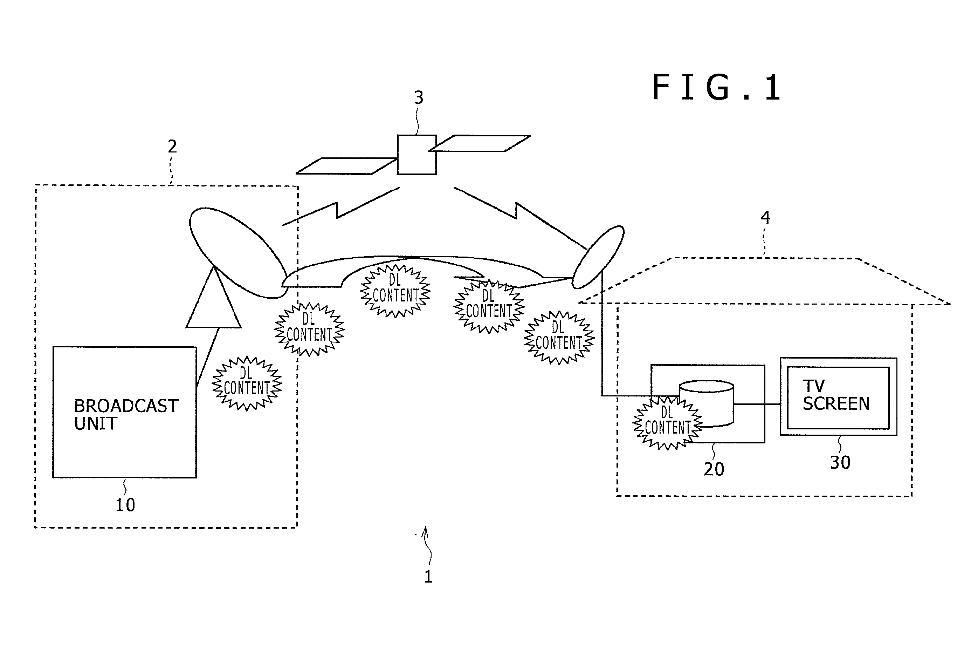

   FIG. 1 is a schematic view showing a configuration of an NRT system as an embodiment of the present technology.
[FIG. 2]

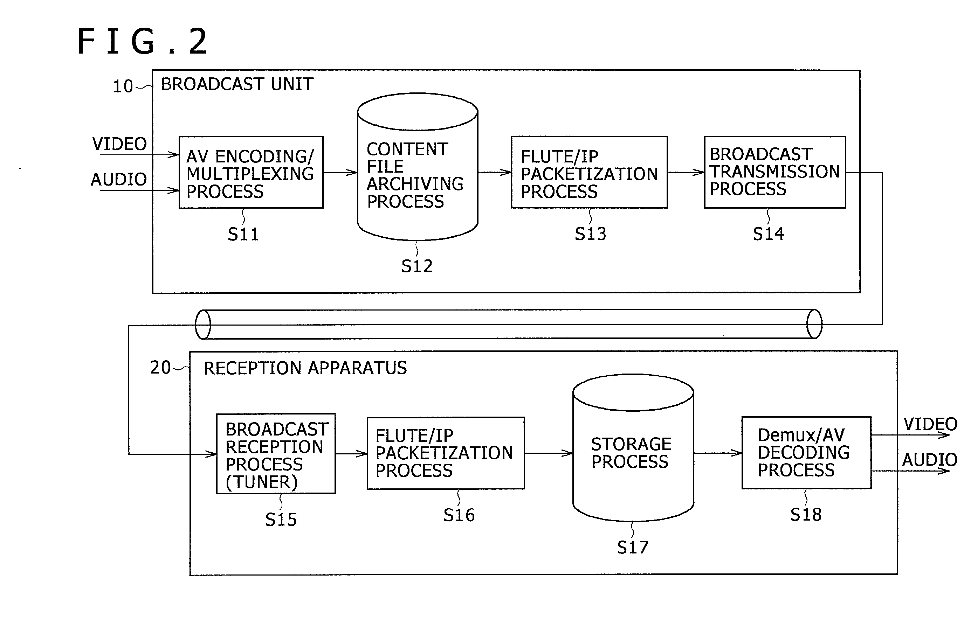

   FIG. 2 is a schematic view explanatory of the transmission and reception flows of an NRT broadcast.
[FIG. 3]

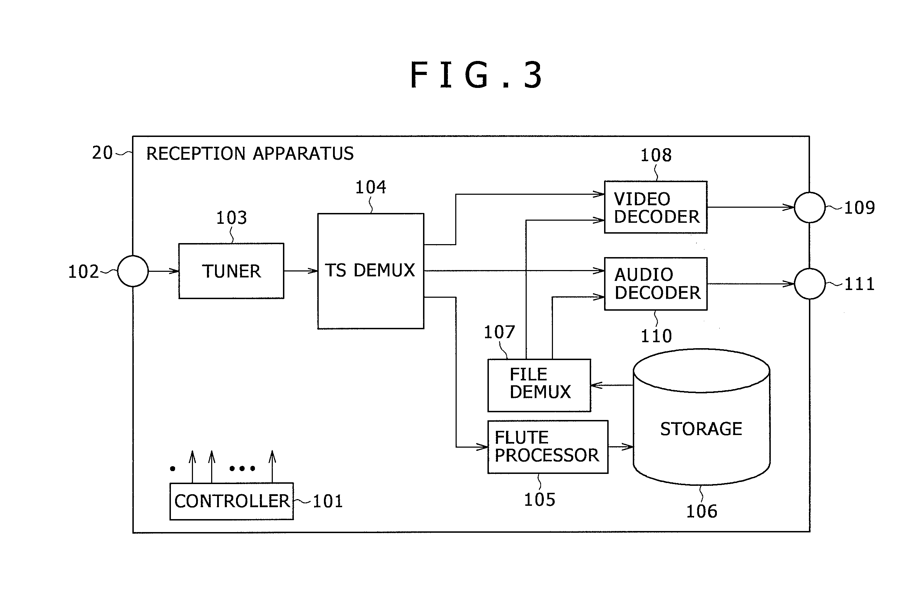

   FIG. 3 is a schematic view showing a typical configuration of a reception apparatus.
[FIG. 4]

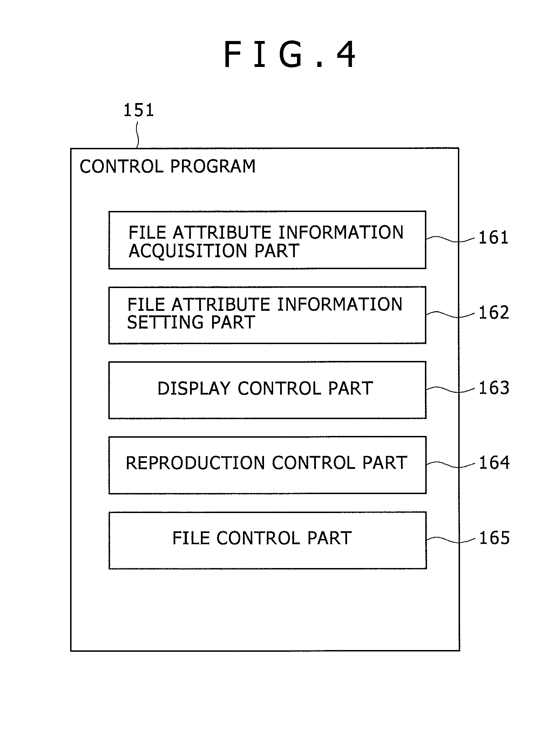

   FIG. 4 is a schematic view showing a configuration example of a control program.
[FIG. 5]

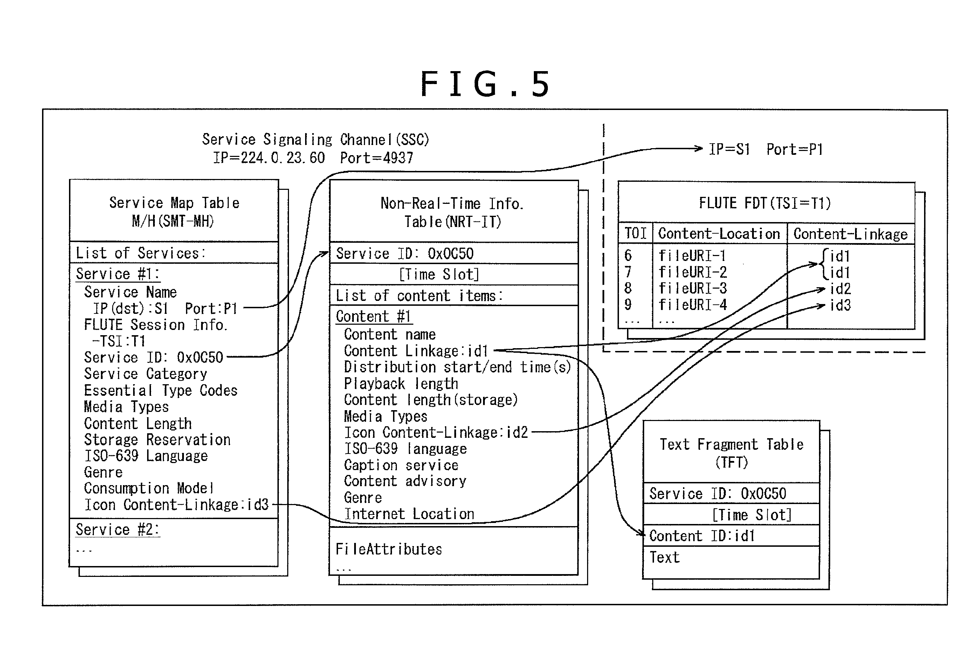

   FIG. 5 is a schematic view showing typical tables transmitted as control data.
[FIG. 6]

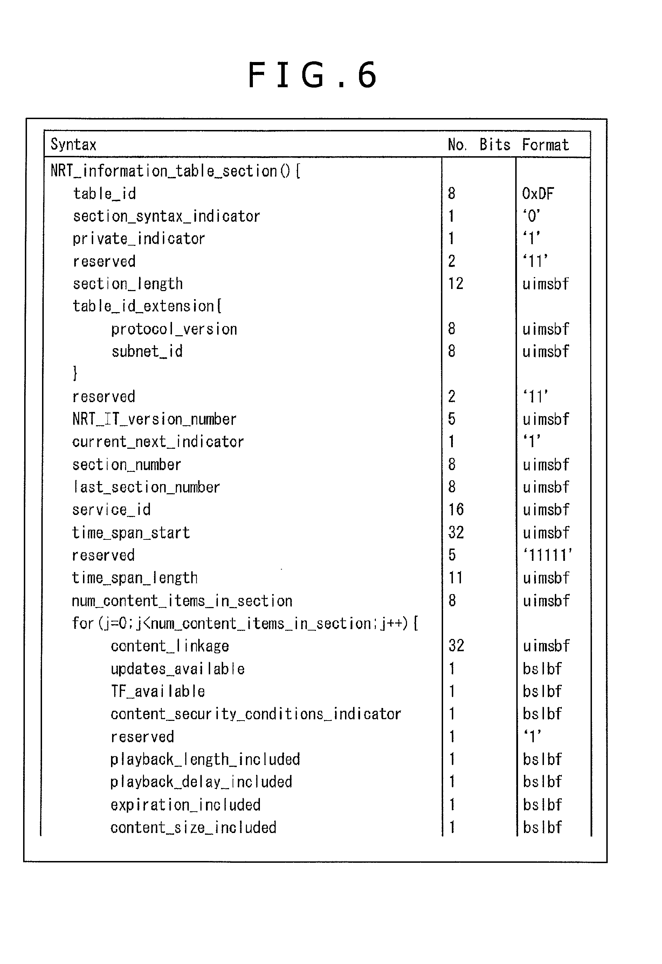

   FIG. 6 is a tabular view showing a structure of an NRT-IT.
[FIG. 7]

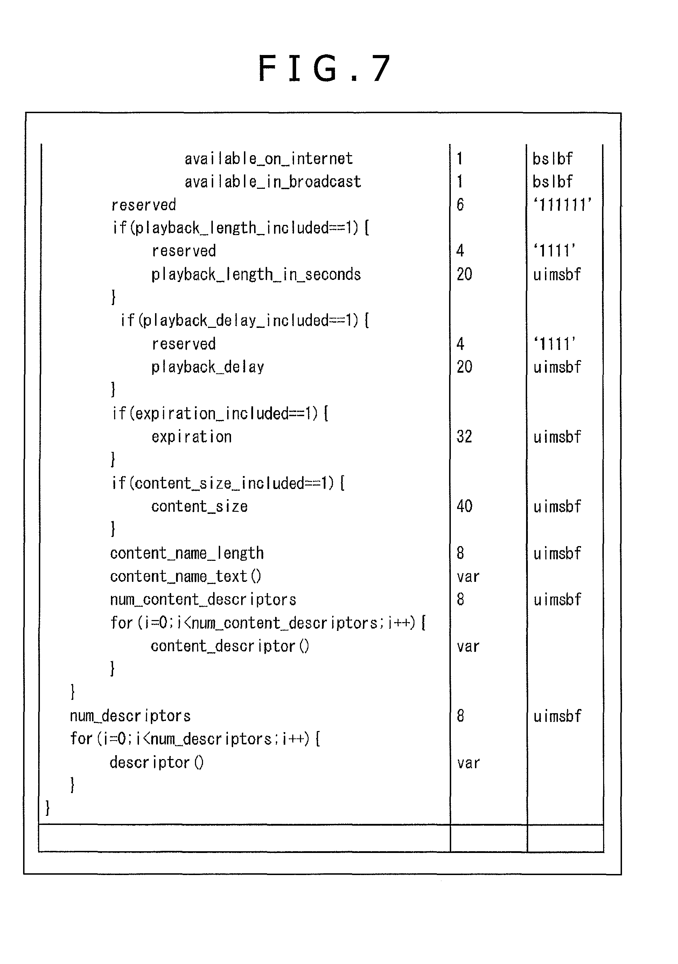

   FIG. 7 is another tabular view showing the structure of the NRT-IT.
[FIG. 8]

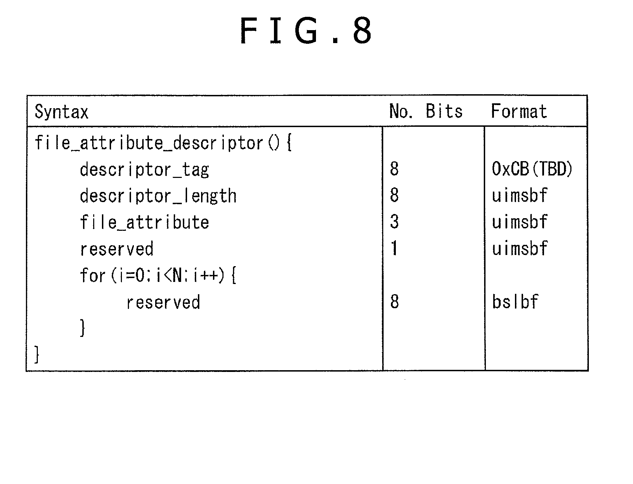

   FIG. 8 is a tabular view showing a typical description of a file attribute information descriptor.
[FIG. 9]

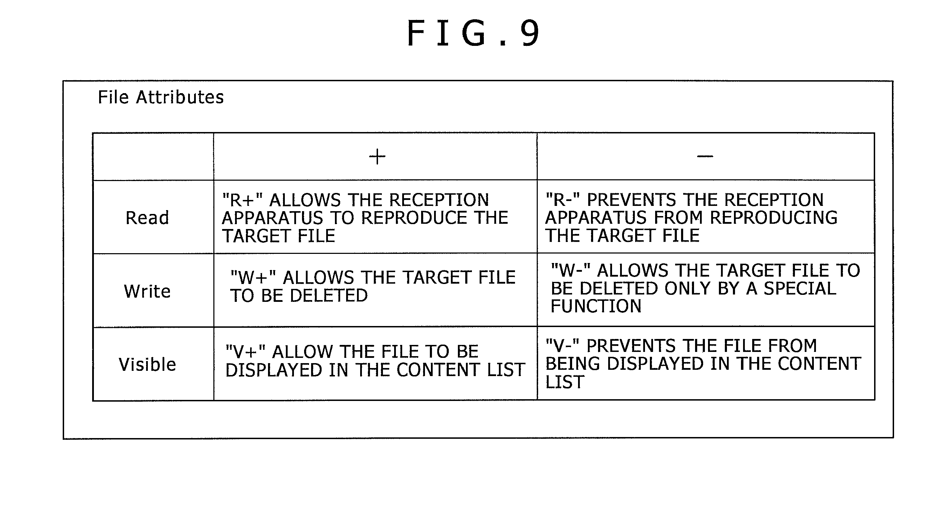

   FIG. 9 is a tabular view showing settings of file attribute information.
[FIG. 10]

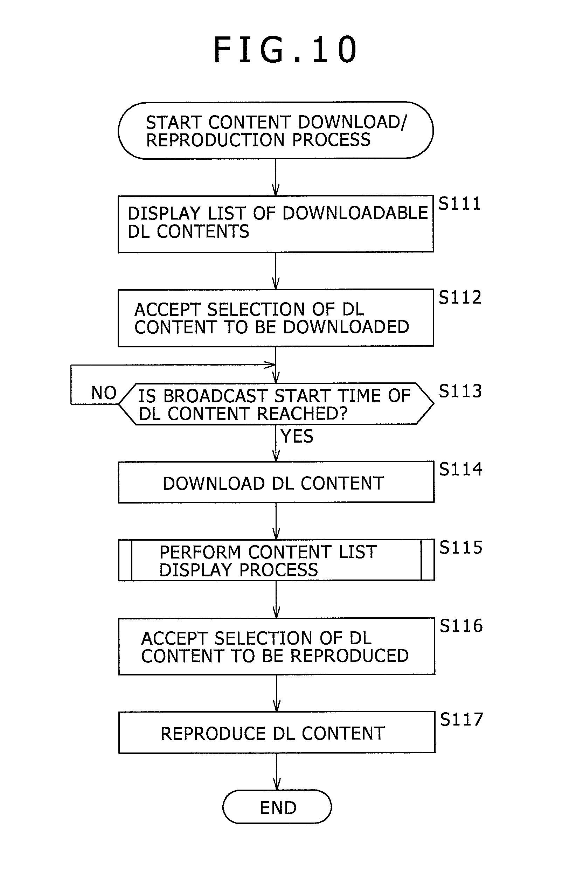

   FIG. 10 is a flowchart explanatory of a content download/reproduction process.
[FIG. 11]

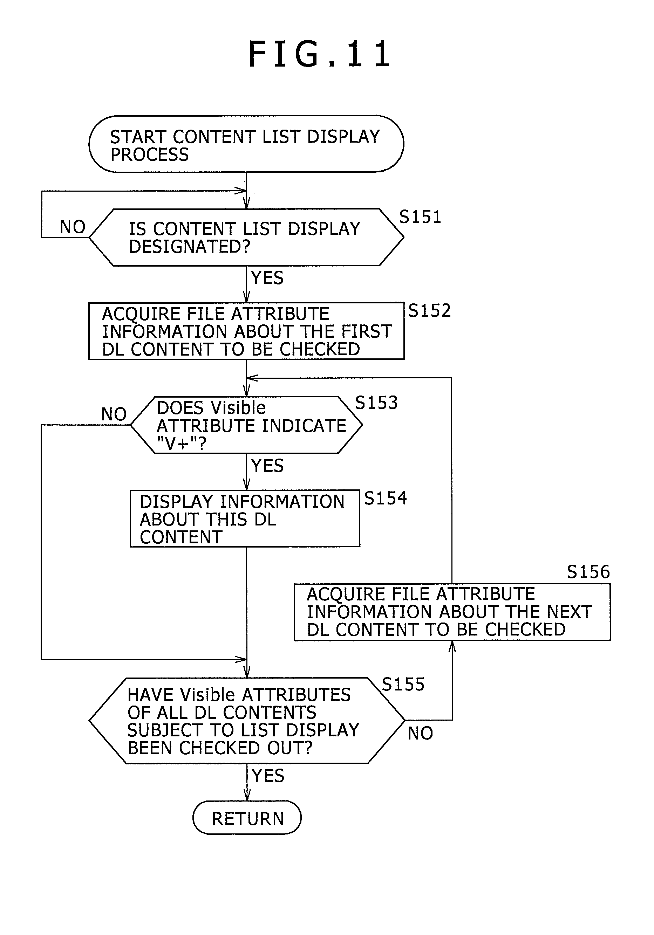

   FIG. 11 is a flowchart explanatory of a content list display process.
[FIG. 12]

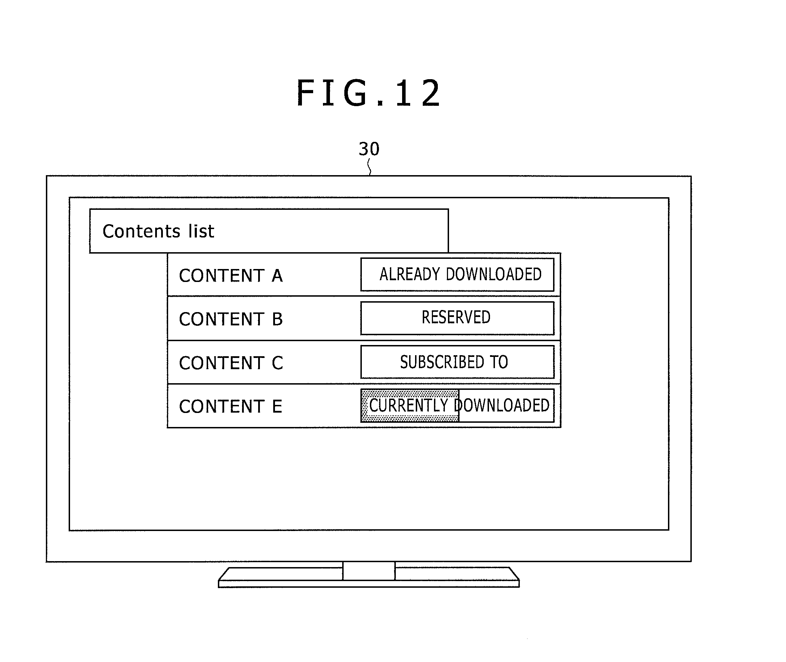

   FIG. 12 is a schematic view showing a display example of the content list.
[FIG. 13]

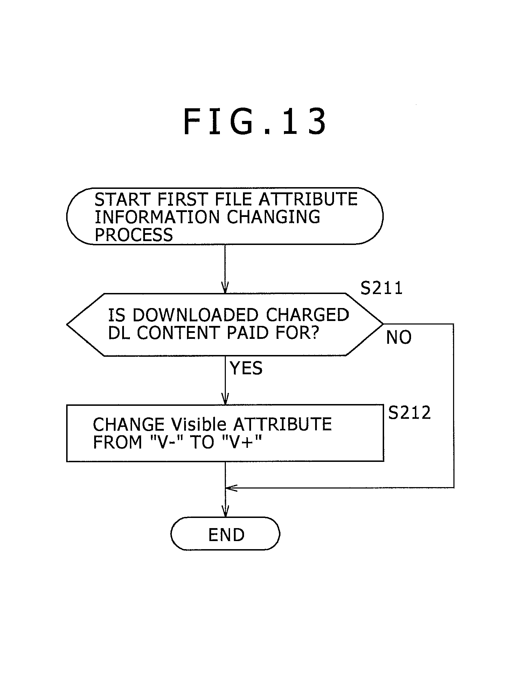

   FIG. 13 is a flowchart explanatory of a first file attribute information changing process.
[FIG. 14]

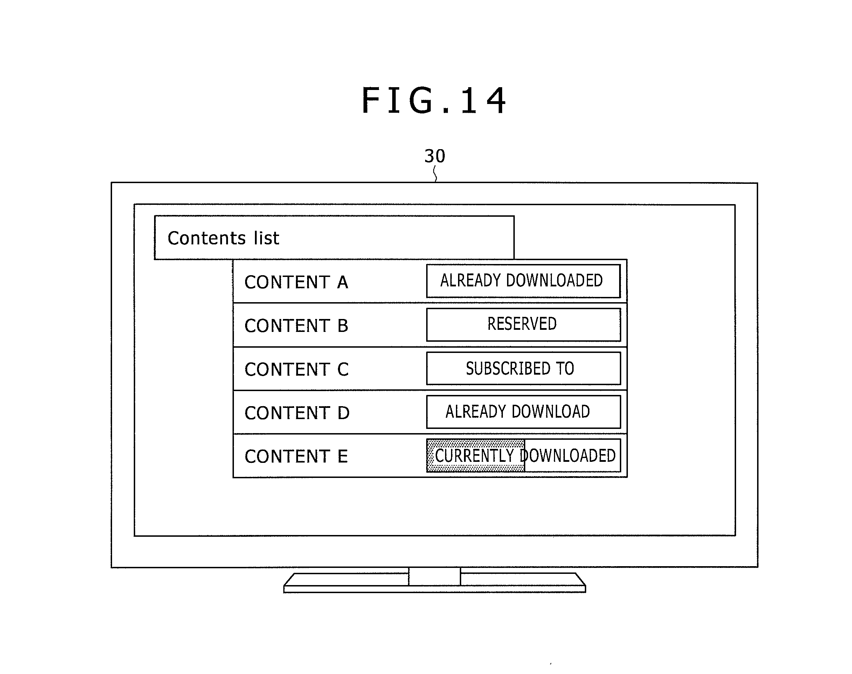

   FIG. 14 is a schematic view showing another display example of the content list.
[FIG. 15]

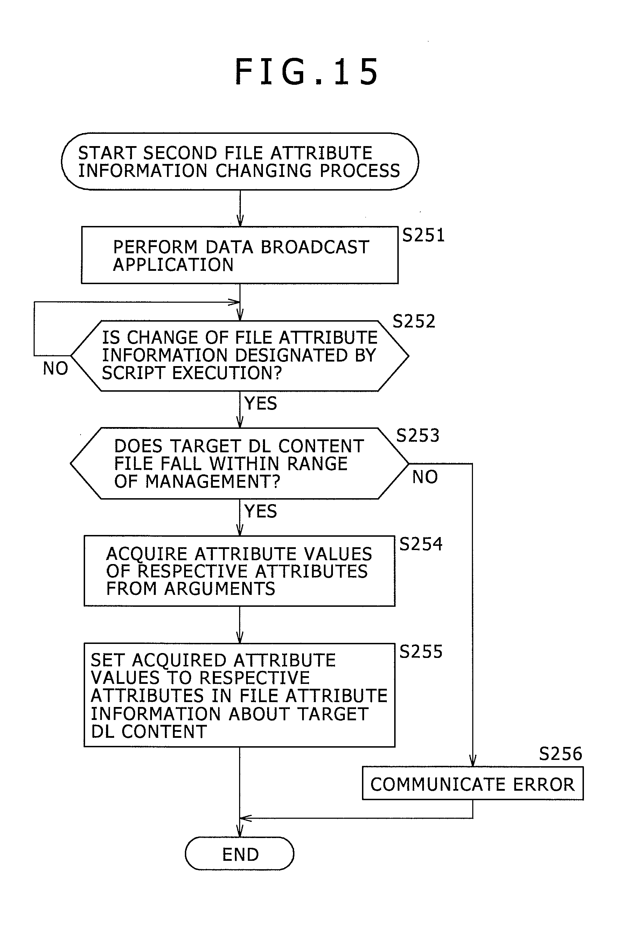

   FIG. 15 is a flowchart explanatory of a second file attribute information changing process.
[FIG. 16]

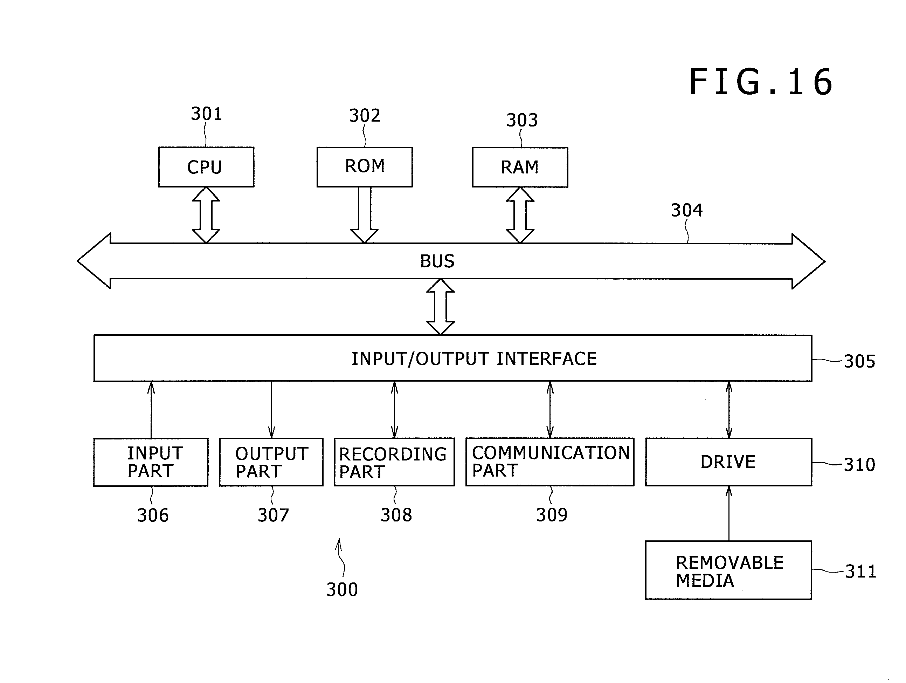

   FIG. 16 is a schematic view showing a typical configuration of a computer.

### [Description of Embodiments]

The mode for carrying out the present technology will now be explained below in reference to the accompanying drawings.

### [Explanation of an outline of the NRT service]

FIG. 1 shows a configuration of an NRT system as one embodiment of the present technology.

An NRT system 1 provides NRT service offerings. As shown in FIG. 1, the NRT system 1 is configured to include a broadcast unit 10 installed in a broadcast station 2, and a reception apparatus 20 and a TV set 30 installed in a user's home 4.

The broadcast unit 10 transmits target contents to be downloaded (called DL contents hereunder) via a satellite 3 using a TV broadcast signal. In this specification, the transmission of DL contents by use of the TV broadcast signal is expressed as NRT broadcasting.

That is, for NRT broadcasting, the broadcast unit 10 in the example of FIG. 1 adopts a technique involving the use of satellite broadcast waves. However, the technique for TV broadcasting itself by the broadcast unit 10 is not limited to the example of FIG. 1. The broadcast unit 10 may alternatively adopt techniques involving the use of terrestrial broadcast waves or the use of CATV (Community Antenna Television) networks. It is also possible to adopt techniques that utilize broadcast waves other than the TV broadcast waves, such as digital radio broadcast waves.

The reception apparatus 20 receives DL contents transmitted from the broadcast unit 10 using broadcast waves and accumulates the received contents in storage. In this specification, the action of the reception apparatus 20 receiving and storing DC contents is expressed as downloading of the DC contents. Also, the reception apparatus 20 allows DL contents to be reproduced by the TV set 30 or the like at appropriate timings within an authorized period of use.

Although the reception apparatus 20 is shown set up outside the TV set 30 in the example of FIG. 1, the reception apparatus 20 may alternatively be incorporated in the TV set 30.

### [Explanation of the transmission and reception flows of NRT broadcasting]

FIG. 2 is a schematic view explanatory of the transmission and reception flows of an NRT broadcast.

When supplied with images and sounds constituting DL contents, the broadcast unit 10 performs an AV encoding/multiplexing process in step S11. In this context, the AV encoding/multiplexing process refers to a process in which the signals of images and sounds are compression-encoded using predetermined methods and the resulting video and audio data are multiplexed into files of DL contents.

The DL content files for this embodiment may be organized in units of, say, TV programs but are not limited thereby. In this case, one file may contain the DL content making up one TV program.

In step S12, the broadcast unit 10 retains DL content files. The process of step S12 is called a content file archiving process. The broadcast unit 10 also retains as files diverse information about the downloaded programs constituted as the DL contents.

In step S13, the broadcast unit 10 performs a FLUTE/IP packetization process in accordance with a predetermined broadcasting schedule. In step S14, the broadcast unit 10 performs a broadcast transmission process. In this context, the FLUTE/IP packetization process refers to a process in which DL content files or the like are made into TS (Transport Stream) packets in accordance with FLUTE (File Delivery over Unidirectional Transport) and UDP (User Datagram Protocol)/IP (Internet Protocol). Also, the broadcast transmission process refers to a series of processes leading up to the transmission of TS packets as broadcast waves.

The process flow from step S11 to step S14 above constitutes the transmission flow of NRT broadcasting by the broadcast unit 10. The process flow from step S15 to step S18, to be explained below, constitutes the reception flow of NRT broadcasting.

The reception apparatus 20 performs a broadcast reception process in step S15, conducts a FLUTE/IP packetization process in step S16, and carries out a storage process in step S17.

In this context, the broadcast reception process refers to a series of processes ranging from the reception of broadcast waves by a tuner to the extraction of TS packets from the received signal. The FLUTE/IP packetization process refers to a process in which DL content files or the like are restored from the TS packets in accordance with FLUTE and UDP/IP. The storage process refers to a process in which the DL content files or the like are accumulated in storage.

When the processes of steps S15 through S17 are performed as described above, the DL contents are downloaded.

In step S18, the reception apparatus 20 performs a Demux/AV decoding process at appropriate timings within an authorized period of use. In this context, the Demux/AV decoding process refers to a series of processes ranging from the separation of the video data and audio data contained in the DL content targeted to be reproduced, to the expansion decoding of the respective data by predetermined methods, to the output of the resulting video and audio signals.

When the video and audio signals are fed to the TV set 30 or the like, the target DL content to be reproduced is reproduced. The user is thus able to view the downloaded program.

### [Typical configuration of the reception apparatus]

The configuration of the reception 20 is explained below in reference to FIG. 3.

The reception apparatus 20 is configured to include a controller 101, an input part 102, a tuner 103, a TS demux 104, a FLUTE processor 105, storage 106, a file demux 107, a video decoder 108, a video output part 109, an audio decoder 110, and an audio output part 111.

The controller 101 controls the operations of the components making up the reception apparatus 20.

The broadcast waves transmitted from the broadcast unit 10 via a satellite 13 are input to the input part 102. The tuner 103 obtains the received signal by demodulating the broadcast waves received from the broadcast unit 10 and supplies the obtained signal to the TS demux 104.

The TS demux 104 extracts TS packets from the received signal fed from the tuner 103. The TS packets are sent to the FLUTE processor 105.

That is, the tuner 103 and TS demux 104 carry out the broadcast reception process of step S15 in FIG. 2.

Incidentally, the reception apparatus 20 supports not only NRT broadcasts but also so-called real-time broadcasts. Thus in the case of real-time broadcasting, a video stream is generated from those TS packets that contain the video data and the generated stream is supplied to the video decoder 108. Also, an audio stream is generated from those TS packets that contain the audio data and the generated stream is fed to the audio decoder 110.

In accordance with FLUE and UDP/IP, the FLUTE processor 105 restores DL content files or the like from the TS packets and accumulates the restored files in the storage 106. In this manner, a plurality of DL contents are accumulated as files in the storage 106. Also, information such as metadata is also stored in the form of files. That is, the FLUTE processor 105 performs the FLUTE/IP packetization process of step S16 and the storage process of step S17 in FIG. 2.

The file demux 107 searches the multiple files accumulated in the storage 106 for the file of the target DL content to be reproduced, and acquires video data and audio data separately from the file. The file demux 107 supplies the video data to the video decoder 108 and the audio data to the audio decoder 110.

The video decoder 108 performs an expansion decoding process on the video data coming from the file demux 107 using a predetermined method and outputs the resulting video signal to the TV set 30 via the video output part 109. The audio decoder 110 carries out an expansion decoding process on the audio data sent from the file demux 107 using a predetermined method and outputs the resulting audio signal to the TV set 30 via the audio output part 111.

That is, the file demux 107, video decoder 108, and audio decoder 110 perform the Demux/AV decoding process of step S18 in FIG. 2.

The reception apparatus 20 is configured as described above.

### [Composition example of the control program]

FIG. 4 is a schematic view showing a composition example of a control program 151 executed by the controller 101.

The control program 151 is composed of a file attribute information acquisition part 161, a file attribute information setting part 162, a display control part 163, a reproduction control part 164, and a file control part 165.

The file attribute information acquisition part 161 acquires file attribute information about DL contents by referring to the NRT-IT. The file attribute information acquisition part 161 supplies the acquired file attribute information to the display control part 163, reproduction control part 164, or file control part 165.

The file attribute information is information which concerns file attributes and which is set for each DL content file. The file attribute information is included in the NRT-IT. For example, the attributes stipulated in the file attribute information may include a Read attribute for setting whether or not the file can be read, a Write attribute for setting whether or not the file can be changed, and a Visible attribute for setting whether or not the file can be made visible in a list or the like. That is, the file attribute information may be the information for setting so-called file permissions. The file attribute information will be discussed later in detail.

The file attribute information setting part 162 sets the attribute value of each of the attributes stipulated in the file attribute information by referring to the NRT-IT.

The display control part 163 controls the display of various screens to be displayed on the TV set 30. Also, the display control part 163 controls the display of DL contents in a list based on the attribute value of the Visible attribute stipulated in the file attribute information supplied from the file attribute information acquisition part 161.

The reproduction control part 164 controls the Demux/AV decoding process (of step S18 in FIG. 2) carried out by the file demux 107, video decoder 108, and audio decoder 110. Also, the reproduction control part 164 controls the reproduction of DL contents based on the attribute value of the Read attribute stipulated in file attribute information supplied from the file attribute information acquisition part 161.

The file control part 165 controls diverse operations on the DL content files accumulated in the storage 106. Also, the file control part 165 controls changes of DL contents (e.g., their erasure) based on the attribute value of the Write attribute stipulated in the file attribute information supplied from the file attribute information acquisition part 161.

The control program 151 is composed as explained above.

### [Method for downloading DL contents]

The method for downloading DL contents is explained below.

In addition to video and audio data, the above-mentioned TS packet when transmitted contains control data such as an SMT (Service Map Table) and an NRT-IT. By referring to the SMT and NRT-IT, the reception apparatus 20 identifies the positions (e.g., temporal positions) at which to acquire DL contents transmitted using a FLUTE session.

FIG. 5 shows typical tables transmitted as control data. FIG. 5 illustrates tables made of an SMT, an NRT-IT, an FDT, and a TFT.

The SMT indicates the attribute information about the service level of NRT services included in a transport stream. The NRT-IT indicates the attribute information about the content level included in a single NRT service. The SMT and NRT-IT are included in an SSC (Service Signaling Channel) transmitted using a fixed IP address and UDP port in the transport stream. Here, the IP address is 224.0.23.60 and the port number is 4937, for example.

As shown in FIG. 5, the SMT describes the attribute information in units of NRT services such as Service #1, Service #2, etc., for example. Also, the SMT describes NRT service-related information in units of NRT services, such as Service Name, IP, Port, Service ID, Service Category, Essential Type Codes, Media Type, Content Length, Storage Reservation, ISO-639 language, Genre, Consumption Model, Icon Content-Linkage, etc.

The Service Name describes the name of the NRT service in question.

The IP(dst) describes the IP address of the destination. And the Port describes the port number of the destination. That is, a FLUE session is performed by transmission of a series of packets used to transmit DL contents, the packets being distinguished from one another by the combination of the IP address and port number of the destination of each packet.

The Service ID describes the identification information about the NRT service in question. And the Service Category describes the category to which the NRT service in question belongs. The Essential Type Codes describe the codes each indicative of a predetermined type.

The Media Type describes the media type. The Content Length describes the data amount of DL contents. The Storage Reservation describes information about the reservation of storage. The ISO-639 language describes language such as Japanese or English.

The Genre describes information about the genre to which the NRT service in question belongs. And the Consumption Model describes information about a predetermined model. The Icon Content-Linkage describes icon identification information.

Also as shown in FIG. 5, the NRT-IT describes the attribute information in units of DL contents such as Content #1, Content #2, etc., for example. In addition to the Service ID, the NRT-IT describes DL content-related information in units of DL contents, such as Content name, Content-Linkage, Distribution start/end time, Playback length, Content length, Media Types, Icon Content-Linkage, ISO-639 language, Caption service, Content advisory, Genre, Internet Location, File Attributes, etc.

The Service ID describes the identification information identifying the NRT service. The Service ID is associated with the service ID of each NRT service described in the SMT.

The Content name describes the title of the DL content in question. Besides, the Content-Linkage describes the identification information identifying this DL content. The Distribution start/end time describes information indicating the start time and end time of this DL content.

The Playback length describes the playback time of the DL content in question. Besides, the Content length describes the data amount of the DL content accumulated in storage. The Media Types describe media types.

The Icon Content-Linkage describes icon identification information. Besides, the ISO-639 language describes language such as Japanese or English. The Caption service describes information about captions and subtitles.

The Content advisory describes information about the recommendations regarding DL contents. Besides, the Genre describes information about the genre to which the DL content in question belongs. The Internet Location describes the URL (Uniform Resource Locator) of the location from which to acquire the application program to be distributed over the Internet.

The File Attributes describes the file attribute information about DL contents.

Meanwhile, under FLUTE, the files and others to be transmitted are managed as a single object using a TOI (Transport Object Identifier). Also, an aggregate of a plurality of objects is managed as a single session using a TSI (Transport Session Identifier).

That is, the objects transmitted from the broadcast unit 10 to the reception apparatus 20 are placed in IP packets each supplemented with an ALC/LCT header and others. This header describes identification information identifying each session as the Transport Session Identifier (TSI). Also, the header describes identification information identifying a plurality of objects transmitted in each session as the Transport Object Identifier (TOI). In other words, in a FLUTE-based session, it is possible to designate a specific file using two kinds of identification information, i.e., TSI and TOI.

Also in the FLUTE-based session, an FDT (File Delivery Table) is transmitted periodically for transmitting diverse attribute information about NRT service files. The FDT is transmitted as a file of which TOI = 0 for every TSI. This FDT describes index information regarding each TSI. Also, the FDT is transmitted by an FDT Instance, i.e., an object intended for FDT transmission. Thus the FDT Instance is placed in IP packets of the FDT.

As described, the reception apparatus 20 restores the DL content from a plurality of files using the index information described in the FDT. That is, using FLUTE sessions, the reception apparatus 20 can download DL contents in IP packets.

Returning to the explanation of FIG. 5, the FDT (File Delivery Table) describes attribute information about the files to be distributed using FLUTE sessions. In the FDT, the TOI, Content Location, Content-Linkage, and other attribute information are described in a manner associated with one another.

The TOI (Transport Object Identifier) describes identification information of the file object to be transmitted. The TOI for the FDT Instance describes 0, and the TOI for the file object to be transmitted describes the identification information to be placed in a download header, for example.

The Content Location describes file identification information using a URI (Uniform Resource Locator). The Content-Linkage describes identification information about DL contents and others. This Content-Linkage is associated with the Content-Linkage and Icon Content-Linkage for each of the DL contents described in the NRT-IT.

The TFT (Text Fragment Table) describes Content IDs and Texts in a manner associated with one other. Each Content ID describes identification information identifying a given DL content. This Content ID is associated with the Content-Linkage for each of the DL contents described in the NRT-IT. The Text describes text information.

Each of the tables transmitted as the control data is constituted as explained above.

And in reference to the above-described SMT, NRT-IT, and FDT, the reception apparatus 20 downloads the DL contents transmitted by broadcast waves. That is, by referring to the SMT, the reception apparatus 20 acquires the IP address and port number associated with the Service ID of the designated NRT service. The reception apparatus 20 acquires the FDT of which TOI = 0 from the FLUTE session (TSI = T1) designated by the combination of the acquired IP address (S1) and port number (P1).

Also, in reference to the NRT-IT, the reception apparatus 20 identifies the Content-Linkage associated with the Service ID in question. Then, in reference to the acquired FDT, the reception apparatus 20 checks the Content-Linkage (id1) identified by the NRT-IT so as to determine the Content-Linkage that is id1. This allows the reception apparatus 20 to identify the TOI (TOI = 6, 7) associated with the Content-Linkage (id1). As a result, the reception apparatus 20 downloads the DL content by acquiring the DL content file based on the object identified by the TOI (TOI = 6, 7) in a FLUTE session (TSI = T1).

The reception apparatus 20 references the FDT to check the Icon Content-Linkage (id3) identified by the SMT, and identifies the TOI (TOI = 9) associated with the Content-Linkage (id3). Also, the reception apparatus 20 references the FDT to check the Icon Content-Linkage (id2) identified by the NRT-IT, and identifies the TOI (TOI = 8) associated with the Content-Linkage (id2). The reception apparatus 20 further acquires these files.

The preceding paragraphs explained the method for downloading DL contents transmitted by broadcast waves.

### [Details of the NRT-IT]

The NRT-IT is explained below in detail by reference to FIGS. 6 through 9.

### (Composition of the NRT-IT)

The NRT-IT is composed as shown in FIGS. 6 and 7. Besides, as shown in FIG. 7, various descriptors can be described in "descriptor()" of the NRT-IT. And the descriptor for describing the file attribute information set for each DL content file (descriptor is called the file attribute information descriptor hereunder) is described in "descriptor()" of FIG. 7.

FIG. 8 shows a typical description of the file attribute information descriptor.

"descriptor_tag" describes the tag value assigned to the descriptor in question. Besides, "desriptor_length" describes the descriptor length of this descriptor.

"file_attribute" describes file attribute information. The attributes stipulated in the file attribute information include the Read attribute, Write attribute, and Visible attribute.

As shown in FIG. 9, a sign "+" or "-" is set to each of the Read attribute, Write attribute, and Visible attribute. The sign "+" indicates that the operation on the file set by the attribute in question is permitted. And the sign "-" indicates that the operation on the file is denied. In the ensuing description, R+ denotes the case where "+" is set as the attribute value of the Read attribute, and R- represents the case where "-" is set as the attribute value of the Read attribute. In like manner, the Write attribute is noted as W+ or W-, and the Visible attribute as V+ or V-.

That is, where "R+" is set as the attribute value of the Read attribute, the target file is allowed to be read, so that the reception apparatus 20 can reproduce the DL content in question. On the other hand, where "R-" is set as this attribute value, the reading of the target file is denied, so that the reception apparatus 20 cannot reproduce the DL content.

Also, where "W+" is set as the attribute value of the Write attribute, the target file is allowed to be changed, so that the reception apparatus 20 can change the DL content. On the other hand, where "W-" is set as this attribute value, the change of the target file is denied, so that the reception apparatus 20 cannot change the DL content. Setting the Write attribute as desired enables an operation in which, for example, the reception apparatus 20 permits erasure of the target file if "W+" is set but permits only the user having input a password for successful authentication to delete the file in question if "W-" is set.

Also, where "V+" is set as the attribute value of the Visible attribute, the target file is allowed to be displayed, so that the reception apparatus 20 can display the DL content in a list. On the other hand, where "V-" is set as this attribute value, the display of the target file is denied, so that the reception apparatus 20 cannot display the DL content in a list.

The Read attribute, Write attribute, and Visible attribute may be represented in three bits altogether, one bit being allotted to each attribute. For example, it may be assumed that R+ is represented by "r," W+ by "w" and V+ by "v" and that R-, W- and V- are each denoted by "-." On that assumption, if all attributes are permitted, then the notation is given as "rwv." In that case, the three-digit notation is represented by a numerical value of 7.

And if solely the Read attribute and Write attribute are permitted, the notation is given as "rw-." This three-digit notation is represented by a numerical value of 6. Further, if the only the Read attribute is permitted, the notation is given as "r--." This three-digit notation is represented by a numerical value of 4. Also, if all attributes are denied, then the notation is given as "-." This three-digit notation is represented by a numerical value of 0.

As explained, the Read attribute, Write attribute, and Visible attribute making up the file attribute information about DL content files are set as desired so that the target file can be handled in keeping with the operations of interest. This makes it possible to offer various operation modes of the NRT service.

The method for describing the file attribute information descriptor explained above may be varied as desired and is not limited to the description example in FIG. 8. Also, the Read attribute, Write attribute, and Visible attribute are only exemplary attributes stipulated in the file attribute information; other attributes may also be stipulated.

The preceding paragraphs explained the NRT-IT in detail.

### [Specific operation examples]

Specific operation examples are explained below in reference to FIGS. 10 through 15.

### (DL content download/reproduction process)

First, a content download/reproduction process is explained by referring to the flowchart of FIG. 10.

In step S111, the controller 101 causes the TV set 30 to display a list of downloadable DL contents. This list is a list of the DL contents offered by the NRT service and is generated on the basis of the SMT and NRT-IT, for example.

In step S112, the controller 101 accepts the selection of the DL content to be downloaded in accordance with the user's operations on the list displayed in step S111. In this step, the download of the DL content that the user wants to view is reserved.

In step S113, the controller 101 determines whether or not the broadcast start time of the DL content selected in step S112 is reached. When the broadcast start time of the DL content in question is reached, the process is proceeded to step S114.

In step S114, the controller 101 controls the tuner 103, TS demux 104, FULTE processor 105, and storage 106 to download the DL content.

Specifically, the tuner 103 is set on the broadcast channel of the DL content selected in step S112, thereby identifying the data to be transmitted on the logical channel over which the content in question is broadcast. Also, based on the SMT and NRT-IT, the FLUTE session in which the content in question is to be transmitted is identified, and the files constituting the FLUTE session are acquired. Later, when the broadcast end time is reached, the acquisition of all files making up the FLUTE session is finished, which completes the download of the DL content.

If a plurality of DL contents are selected in step S112, the subsequent steps above are repeated so that all selected DL contents will be downloaded.

In step S115, the controller 101 performs a content list display process. In the content list display process, the TV set 30 is made to display such lists as a list of the DL contents reserved in step S112 and a list of the DL contents downloaded in step S114.

The content list display process will be discussed later in detail by reference to the flowchart of FIG. 11.

In step S116, the controller 101 accepts the selection of the DL content to be reproduced in accordance with the user's operations on the lists displayed in step S115.

In step S117, the controller 101 controls the storage 106, file demux 107, video decoder 108, and audio decoder 110 to reproduce the DL content. This step starts reproduction of the DL content that the user wants to view, allowing the DL content to be viewed on the TV set 30.

The preceding paragraphs explained the content download/reproduction process.

### (Content list display process)

Next, the content list display process corresponding to step S115 in FIG. 10 is explained in reference to the flowchart of FIG. 11.

In step S151, the controller 101 determines whether or not content list display is designated in accordance with the user's operations. If it is determined in step S151 that content list display is designated, the process is proceeded to step S152.

In step S152, the file attribute information acquisition part 161 references the NRT-IT to acquire the file attribute information of the DL content to be checked first from among all the contents subject to list display.

In step S153, the display control part 163 determines whether or not the attribute value of the Visible attribute in the file attribute information acquired by the file attribute information acquisition part 161 indicates "V+." If it is determined in step S153 that the attribute value of the Visible attribute indicates "V+," the process is proceeded to step S154.

In step S154, the display control part 163 displays information (e.g., title) about the DL content of which the attribute value of the Visible attribute is set to "V+." Upon completion of the display process in step S154, the process is proceeded to step S155.

If it is determined in step S153 that the attribute value of the Visible attribute indicates "V-," then the process of step S154 is skipped and the process is proceeded to step S155. That is, the information about the DL content of which the attribute value of the Visible attribute is set to "V-" is not displayed.

In step S155, the display control part 163 determines whether or not the Visible attributes of all the DL contents subject to list display have been checked. If it is determined in step S155 that not all DL contents have had their Visible attributes checked yet, the process is proceeded to step S156.

In step S156, the file attribute information acquisition part 161 references the NRT-IT to acquire the next DL content to be checked from among the contents subject to list display. When the file attribute information is acquired, the process is proceeded to step S153.

And in step S153, the display control part 163 determines whether or not the attribute value of the Visible attribute in the acquired file attribute information indicates "V+." If it is determined that the attribute value of the Visible attribute indicates "V+," the information about the DL content in question is displayed (in step S154).

As explained, steps S153 through S156 are repeated until the Visible attributes of all the DL contents subject to list display have been checked. Displayed in list form is the information about the DL contents of which the attribute value of the Visible attribute in the file attribute information is set to "V+." On the other hand, the information about the DL contents of which the attribute value of the Visible attribute is set to "V-" is not displayed in list form.

FIG. 12 shows a display example of the content list.

In the example of FIG. 12, the screen of the TV set 30 displays a content list showing a downloaded content A, a reserved content B, a subscribed-to content C, and a currently downloaded content E. That is, of the DL contents, those which are already or currently downloaded and of which the attribute value of the Visible attribute is set to "V+" are displayed in the content list.

Also in the example of FIG. 12, the downloaded content D has "V-" set as the attribute value of its Visible attribute in the file attribute information, so that the content D is excluded from the content list and is not displayed on the screen of the TV set 30. That is, there may be assumed an operation mode in which the content D, a charged content already downloaded but yet to be paid for, will not be presented to the user, for example. In such a case, "V-" may be set by the broadcast unit 10 as the attribute value of the Visible attribute for the content D in the file attribute information. The setting prevents the content D from getting displayed in the list before the charging process on the content is completed.

Returning to the flowchart of FIG. 11, if it is determined in step S155 that all the DL contents subject to list display have had their Visible attributes checked out, the content list display process is terminated.

The preceding paragraphs explained the content list display process. In the content list display process, the file attribute information about the DL contents subject to list display is acquired. The information about the DL contents of which the attribute value of the Visible attribute is set to "V+" is displayed in the list; the information about the DL contents of which the attribute value of the Visible attribute is set to "V-" is not displayed in the list. Consequently the display and non-display of the information about DL contents can be switched in keeping with the NRT service operation. In this manner, diverse operation modes of the service can be offered flexibly.

### (First file attribute information changing process)

In the above-described display example of FIG. 12, the content D is excluded from list display because its charging process has yet to be completed. However, once the charged content D is paid for, the content should not be excluded from list display. For that reason, it is required to change the file attribute information about the content D in a manner setting "V+" for the attribute value of its Visible attribute.

Explained next in reference to the flowchart of FIG. 13 is a first file attribute information changing process for changing the file attribute information about DL contents.

In step S211, the controller 101 determines whether or not a charging process is performed on a charged DL content already downloaded. If it is determined in step S211 that the charging process has been performed on the DL content in question, the process is proceeded to step S212.

In step S212, the file attribute information setting part 162 changes from "V-" to "V+" the attribute value of the Visible attribute in the file attribute information about the DL content on which the charging process is determined to be completed in step S211. This change involves replacing "V-" with "V+" as the attribute value of the Visible attribute in the file attribute information about the charged content D, for example. As a result, when the above-explained content list display process of FIG. 11 is carried out, the screen of the TV set 30 displays in the content list the content D on which the charging process is completed, in addition to the contents A, B, C and E, as shown in FIG. 14.

That is, from the user's point of view, the downloaded content D can be reproduced the moment the charging process is completed, without the user becoming aware of the content D having been downloaded previously. If the content D could start to be downloaded only upon completion of the charging process, the content D at the time of the payment may or may not be available for distribution. Even if the content D is found available for distribution, it will take some time for the content to become ready for reproduction after the download is started from that point in time. This can be inconvenient for the user.

Thus in the first file attribute information changing process, DL contents are downloaded beforehand. When the charging process on a downloaded content is performed, the attribute value of the Visible attribute for the target DL content is changed from "V-" to "V+" and the information involved is displayed in the list. This allows the downloaded content to be reproduced immediately.

In the explanation above regarding FIG. 13, the first file attribute information changing process was described that it is carried out when the charging process is performed on the charged DL content. However, the charging process is only an exemplary process that triggers the first file attribute information changing process; the first file attribute information changing process may alternatively be performed at timings other than execution of the charging process.

Also in the explanation above regarding FIG. 13, the Visible attribute was shown to be representative of the file attribute information subject to change. Alternatively, the attribute value of the Read attribute or Write attribute may be changed. In the preceding example, the Read attribute may be set instead of the Visible attribute so that when the charged DL content is paid for, the attribute value of the Read attribute for the target DL content will be changed from "R-" to "R+." In this case, the charged DL content yet to be paid for may be displayed in the content list but cannot be reproduced; the charged content can be reproduced only after the charging process is completed.

As explained, the settings of the file attribute information may be changed as needed in keeping with the operation mode of the NRT service. Diverse operation modes of the service can thus be offered in a flexible manner.

The preceding paragraphs explained the first file attribute information changing process.

### (Second file attribute information changing process)

The file attribute information changing process may also be carried out in accordance with the execution of a script described in a data broadcast application. The data broadcast application in this context refers to an application program designed for broadcasting data and executed in interlocked relation to a TV program or some other content. The data broadcast application is either transmitted by broadcast waves or acquired from a predetermined server (not shown) connected to the Internet.

Explained next in reference to the flowchart of FIG. 15 is a second file attribute information changing process that changes the file attribute information about DL contents in accordance with script execution.

In step S251, the controller 101 performs the data broadcast application at an appropriate timing during DL content reproduction.

In step S252, the controller 101 determines whether or not a change of the file attribute information is designated by execution of the script described in the data broadcast application. If it is determined in step S252 that any change of the file attribute information is not designated, this determination process is repeated.

On the other hand, if it is determined in step S252 that a change of the file attribute information is designated, the process is proceeded to step S253. In step S253, the file attribute information setting part 162 determines whether or not the file of the target DL content falls within a range of management.

The determination process above is carried out when DL content files accumulated in the storage 106 are stored into the directory of each of the broadcast stations offering NRT broadcasts. That is, the file attribute information setting part 162 determines whether a given DL content file falls within the range of management depending on whether or not the file for which the change of the file attribute information is designated is a file stored in a layer below the directory of the broadcast station offering the data broadcast application. In other words, the settings of the file attribute information can be changed only within the predetermined range of management established by the business operator offering the data broadcast application and by the business operator offering the file for which the change of the settings of the file attribute information is designated by the data broadcast application.

The above process for determining the range of management is only an example. Other appropriate methods may be adopted instead.

If it is determined in step S253 that the file of the target DL content within the range of management, the process is proceeded to step S254. In step S254, the file attribute information setting part 162 acquires the attribute values designated for each file by script function arguments. For example, the attribute values may be designated as chmod(file,7). Of the function arguments, a first argument designates the file about which the file attribute information is to be changed, and a second argument designates the numerical value corresponding to the three-digit notation based on the above-described attribute bits. In this case, the numerical value of 7 is designated, so that "R+," "W+," and "V+" are set as the attribute values of the Read attribute, Write attribute, and Visible attribute, respectively.

In step S255, the file attribute information setting part 162 sets the acquired attribute values to the corresponding attributes in the file attribute information about the target DL content.

Meanwhile, if it is determined in step S253 that the file of the target DL content is outside the range of management, then the process is proceeded to step S256. In step S256, the file attribute information setting part 162 communicates an error saying that the attempt to change the settings of the file attribute information has failed.

Upon completion of step S255 or S256, the file attribute information changing process is terminated.

The preceding paragraphs explained the second file attribute information changing process. The second file attribute information changing process thus involves changing the settings of the file attribute information in accordance with the attribute values designated for each file by the script function arguments described in the data broadcast application. In this manner, the settings of the file attribute information can be changed as needed in keeping with the operation mode of the NRT service. Consequently, diverse operation modes of the service can be offered in flexible fashion.

### [Explanation of the computer to which the present technology is applied]

The series of processes described above may be executed either by hardware or by software. Where the software-based series of processing is to be carried out, the programs constituting the software are installed into a suitable computer for execution. Such computers may include those with the software incorporated in their dedicated hardware beforehand, and those such as general-purpose personal computers and the like capable of executing diverse functions based on diverse programs installed therein.

FIG. 16 is a block diagram showing a typical hardware configuration of a computer that executes the above-described series of processes using programs.

In the computer 300, a CPU (Central Processing Unit) 301, a ROM (Read Only Memory) 302, and a RAM (Random Access Memory) 303 are interconnected via a bus 304.

The bus 304 is further connected with an input/output interface 305. The input/output interface 305 is connected with an input part 306, an output part 307, a recording part 308, a communication part 309, and a drive 310.

The input part 306 is made up of a keyboard, a mouse, a microphone, etc. The output part 307 is formed by a display unit, speakers, etc. The recording part 308 is composed of a hard disk, a nonvolatile memory, etc. The communication part 309 is constituted by a network interface or the like. The drive 310 drives removable media 311 such as a magnetic disk, an optical disk, a magneto-optical disk, or a semiconductor memory.

In the computer 300 configured as outlined above, the CPU 301 carries out the above-described series of processes by loading programs from, say, the recording part 308 into the RAM 303 for execution by way of the input/output interface 305 and bus 304.

The programs for execution by the computer 300 (CPU 301) may be offered recorded on the removable media 311 constituting package media, for example. Also, the programs may be offered through wired or wireless transmission media such as local area networks, the Internet, and digital satellite broadcasts.

In the computer 300, the programs may be installed via the input/output interface 305 into the recording part 308 from the removable media 311 attached to the drive 310. Also, the programs may be received by the communication part 309 through wired or wireless transmission media before being installed into the recording part 308. Alternatively, the programs may be preinstalled in the ROM 302 or recording part 308.

Also, the programs for execution by the computer 300 may be processed in the depicted sequence of this specification (i.e., on a time series basis), in parallel, or in otherwise appropriately timed fashion such as when they are invoked.

In this specification, the processing steps that describe the programs for causing the computer to perform diverse operations may not be carried out in the depicted sequence in the flowcharts (i.e., on a time series basis); the steps may also include processes that are conducted parallelly or individually (e.g., in parallel or object-oriented fashion).

The programs may be processed by a single computer or by a plurality of computers on a distributed basis. The programs may also be transferred to a remote computer or computers for execution.

Further in this specification, the term "system" refers to an aggregate of a plurality of components (devices, modules (parts)). It does not matter whether or not all components are housed in the same enclosure. Thus a system may be configured with a plurality of devices housed in separate enclosures and interconnected via a network, as well as with a single device that houses a plurality of modules in a single enclosure.

Also, it should be understood that the present technology when embodied is not limited to the above-described embodiments and that various modifications, variations and alternatives may be made of this technology so far as they are within the spirit and scope thereof.

For example, the present technology may be configured in a manner implementing cloud computing in which a single function is shared and jointly processed by a plurality of devices via a network.

Also, the steps explained in reference to the above-mentioned flowcharts may be performed by a single device or carried out by a plurality of devices on a shared basis.

Furthermore, if a single step includes a plurality of processes, these processes may be performed by a single device or carried out on a shared basis by a plurality of devices.

The present technology may also be configured as follows:

(1) A reception apparatus including:
   a reception part configured to receive contents transmitted by broadcast waves and targeted to be downloaded;
   a file attribute information acquisition part configured to acquire file attribute information set for each of the files of the contents; and
   a control part configured to control predetermined operations on the files of the contents based on the file attribute information acquired.
(2) The reception apparatus described in paragraph (1) above, wherein, when the contents have been downloaded or are being downloaded, the file attribute information acquisition part acquires the file attribute information.
(3) The reception apparatus described in paragraph (1) or (2) above, further including
   a file attribute information setting part configured to, if a predetermined process is performed on the contents, change the settings of the file attribute information in accordance with the details of the predetermined process.
(4) The reception apparatus described in any one of paragraphs (1) through (3) above, wherein the file attribute information includes a first attribute for setting whether or not to display the files of the contents, and
   the control part controls the display of a list of the contents based on the first attribute included in the file attribute information.
(5) The reception apparatus described in paragraph (4) above, wherein, if the contents are charged contents, the file attribute information setting part changes the attribute value of the first attribute from non-display to display after a charging process on the contents is completed.
(6) The reception apparatus described in any one of paragraphs (1) through (4) above, wherein the file attribute information includes a second attribute for setting whether or not to read the files of the contents, and
   the control part controls reproduction of the contents based on the second attribute included in the file attribute information.
(7) The reception apparatus described in any one of paragraphs (1) through (6) above, wherein the file attribute information includes a third attribute for setting whether or not to change the files of the contents, and
   the control part controls changes of the contents based on the third attribute included in the file attribute information.
(8) The reception apparatus described in any one of paragraphs (1) through (3) above, wherein the file attribute information setting part changes the settings of the file attribute information in accordance with execution of a script described in an application program to be executed in interlocked relation to the applicable content transmitted by broadcast waves.
(9) The reception apparatus described in paragraph (8) above, wherein the file attribute information setting part changes the settings of the file attribute information solely within a range of management established by a business operator offering the contents and by a business operator offering the application program.
(10) The reception apparatus described in paragraph (1) above, wherein the contents are transmitted by an NRT (Non Real Time) broadcast utilizing a FLUTE (File Delivery over Unidirectional Transport) session, and
   the file attribute information is defined as attributes in an NRT-IT (NRT Information Table).
(11) A reception method for use with a reception apparatus, the reception method including:
   causing said reception apparatus to receive contents transmitted by broadcast waves and targeted to be downloaded;
   causing the reception apparatus to acquire file attribute information set for each of the files of the contents; and
   causing the reception apparatus to control predetermined operations on the files of the contents based on the file attribute information acquired.
(12) A program for causing a computer to function as:
   a reception part receiving contents transmitted by broadcast waves and targeted to be downloaded;
   a file attribute information acquisition part acquiring file attribute information set for each of the files of the contents; and
   a control part controlling predetermined operations on the files of the contents based on the file attribute information acquired.
(13) A transmission apparatus including:
   a setting part configured to set file attribute information for each of the files of contents transmitted by broadcast waves and targeted to be downloaded; and
   a transmission part configured to transmit the contents for which the file attribute information has been set, using the broadcast waves.
(14) A transmission method including:
   setting file attribute information for each of the files of contents transmitted by broadcast waves and targeted to be downloaded; and
   transmitting the contents for which the file attribute information has been set, using the broadcast waves.

### [Reference Signs List]

1 NRT system, 10 Broadcast unit, 20 Reception apparatus, 30 TV set, 101 Controller, 103 Tuner, 104 TS demux, 105 FLUTE processor, 106 Storage, 107 File demux, 108 Video decoder, 110 Audio decoder, 151 Control program, 161 File attribute information acquisition part, 162 File attribute information setting part, 163 Display control part, 164 Reproduction control part, 165 File control part, 300 Computer, 301 CPU.

## Claims

1. A reception apparatus comprising:
a reception part configured to receive contents transmitted by broadcast waves and targeted to be downloaded;
a file attribute information acquisition part configured to acquire file attribute information set for each of the files of said contents; and
a control part configured to control predetermined operations on the files of said contents based on said file attribute information acquired.

2. The reception apparatus according to claim 1, wherein, when said contents have been downloaded or are being downloaded, said file attribute information acquisition part acquires said file attribute information.

3. The reception apparatus according to claim 2, further comprising
a file attribute information setting part configured to, if a predetermined process is performed on said contents, change the settings of said file attribute information in accordance with the details of said predetermined process.

4. The reception apparatus according to claim 3, wherein
said file attribute information includes a first attribute for setting whether or not to display the files of said contents, and
said control part controls the display of a list of said contents based on said first attribute included in said file attribute information.

5. The reception apparatus according to claim 4, wherein, if said contents are charged contents, said file attribute information setting part changes the attribute value of said first attribute from non-display to display after a charging process on said contents is completed.

6. The reception apparatus according to claim 3, wherein
said file attribute information includes a second attribute for setting whether or not to read the files of said contents, and
said control part controls reproduction of said contents based on said second attribute included in said file attribute information.

7. The reception apparatus according to claim 3, wherein
said file attribute information includes a third attribute for setting whether or not to change the files of said contents, and
said control part controls changes of said contents based on said third attribute included in said file attribute information.

8. The reception apparatus according to claim 3, wherein
said file attribute information setting part changes the settings of said file attribute information in accordance with execution of a script described in an application program to be executed in interlocked relation to the applicable content transmitted by broadcast waves.

9. The reception apparatus according to claim 8, wherein
said file attribute information setting part changes the settings of said file attribute information solely within a range of management established by a business operator offering said contents and by a business operator offering said application program.

10. The reception apparatus according to claim 1, wherein
said contents are transmitted by an NRT (Non Real Time) broadcast utilizing a FLUTE (File Delivery over Unidirectional Transport) session, and
said file attribute information is defined as attributes in an NRT-IT (NRT Information Table).

11. A reception method for use with a reception apparatus, comprising:
causing said reception apparatus to receive contents transmitted by broadcast waves and targeted to be downloaded;
causing said reception apparatus to acquire file attribute information set for each of the files of said contents; and
causing said reception apparatus to control predetermined operations on the files of said contents based on said file attribute information acquired.

12. A program for causing a computer to function as:
a reception part configured to receive contents transmitted by broadcast waves and targeted to be downloaded;
a file attribute information acquisition part configured to acquire file attribute information set for each of the files of said contents; and
a control part configured to control predetermined operations on the files of said contents based on said file attribute information acquired.

13. A transmission apparatus comprising:
a setting part configured to set file attribute information for each of the files of contents transmitted by broadcast waves and targeted to be downloaded; and
a transmission part configured to transmit said contents for which said file attribute information has been set, using said broadcast waves.

14. A transmission method comprising:
setting file attribute information for each of the files of contents transmitted by broadcast waves and targeted to be downloaded; and
transmitting said contents for which said file attribute information has been set, using said broadcast waves.
